(19) **Europäisches Patentamt / European Patent Office / Office européen des brevets**

(11) **EP 2 377 838 A1**

(12) **EUROPEAN PATENT APPLICATION**
published in accordance with Art. 153(4) EPC

(43) Date of publication:
**19.10.2011 Bulletin 2011/42**

(21) Application number: **09835049.9**

(22) Date of filing: **25.12.2009**

(51) Int Cl.:
*C04B 35/46* (2006.01)       *H01B 3/12* (2006.01)
*H01P 11/00* (2006.01)

(86) International application number:
**PCT/JP2009/071648**

(87) International publication number:
**WO 2010/074253 (01.07.2010 Gazette 2010/26)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **25.12.2008 JP 2008329128
29.01.2009 JP 2009017923**

(71) Applicant: **Kyocera Corporation
Kyoto-shi
Kyoto 612-8501 (JP)**

(72) Inventors:
• **ENOKIDA, Shiho
Kirishima-shi
Kagoshima 899-4396 (JP)**
• **MURAKAWA, Shunichi
Kirishima-shi
Kagoshima 899-4396 (JP)**

(74) Representative: **Wiedemann, Peter
Hoffmann - Eitle
Patent- und Rechtsanwälte
Arabellastrasse 4
81925 München (DE)**

(54) **DIELECTRIC CERAMIC, DIELECTRIC RESONATOR UTILIZING SAME, AND METHOD FOR MANUFACTURING DIELECTRIC CERAMIC**

(57)     Disclosed is a dielectric ceramic which contains, as the main component, a crystal containing La, A1, Ca and Ti and additionally contains a molybdenum oxide.

FIG. 1

## Description

### TECHNICAL FIELD

The present invention relates to a dielectric ceramic, a dielectric resonator utilizing the ceramic, and a method for manufacturing a dielectric ceramic.

### BACKGROUND ART

A resonator is set into any relay station for portable telephones. In the resonator, a filter is used. The filter is a dielectric member made of, for example, a ceramic (materials). As a ceramic having excellent dielectric properties, a ceramic containing La, A1, Ca and Ti has been hitherto suggested (for example, JP-A-6-7663). It is stated that this dielectric ceramic gives dielectric properties that the dielectric constant is 20 or more and the Q value is 20000 or more.
In recent years, however, resonators have been increasingly required to be made small in size, and further dielectric ceramics having a high dielectric constant and Q value have been demanded.

### SUMMARY OF THE INVENTION

The dielectric ceramic according to an aspect of the present invention comprises, as a main component thereof, a crystal containing La, Al, Ca and Ti, and further contains a molybdenum oxide.
The dielectric resonator according to an aspect of the invention comprises a dielectric member comprising the dielectric ceramic mentioned above, an input terminal and an output terminal that are opposed to each other, the dielectric member being sandwiched between these terminal, and a case surrounding the dielectric member, and dielectric-member-side tips of the input terminal and the output terminal.
The method according to an aspect of the invention for manufacturing a dielectric ceramic, comprises a mixing step of mixing respective powders of a lanthanum compound, an aluminum compound, a calcium compound, and a titanium compound with a powder of any one of a molybdenum oxide, manganese tungstate, and manganese titanate, thereby producing a mixture; a green-body forming step of applying a pressure to the mixture, thereby forming a green body; and a sintering step of sintering the green body.
The dielectric ceramic of the aspect of the invention has a high dielectric constant and Q value.
The dielectric ceramic manufacturing method according to the aspect of the invention makes it possible to yield a dielectric ceramic having high dielectric properties (dielectric constant and Q value).
The dielectric resonator according to the aspect of the invention makes it possible to realize a dielectric resonator smaller in size.

### BRIEF EXPLANATION OF THE DRAWINGS

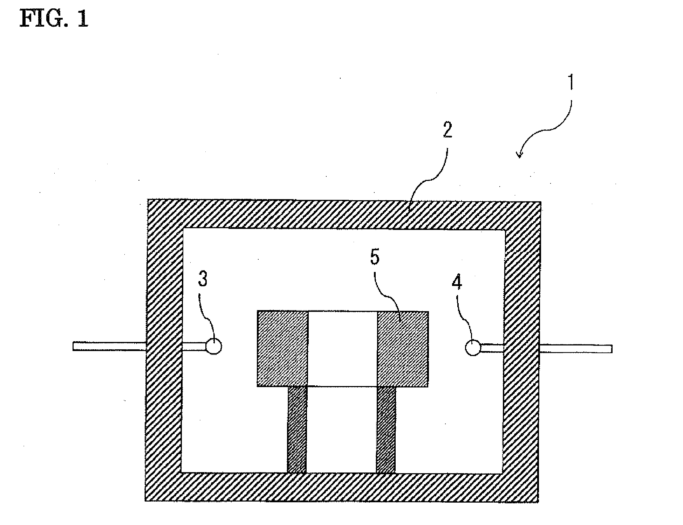

Fig. 1 is a sectional view of a dielectric resonator according to an embodiment of the invention.

### EXPLANATION OF REFERENCE NUMBER

[0011]

1:    dielectric resonator
2:    metallic case
3:    input terminal
4:    output terminal
5:    dielectric member

### EMBODIMENTS FOR CARRYING OUT THE INVENTION

Hereinafter, an embodiment of the invention will be described. A dielectric ceramic of the embodiment of the invention contains, as a main component thereof, a crystal containing La, Al, Ca and Ti, and further contains a molybdenum oxide. The molybdenum oxide is, for example, $MoO_2$, $MoO_3$, $CaMoO_4$, and the like, and is contained as a secondary crystal phase in the dielectric ceramic. This molybdenum oxide releases oxygen with a change in the valence of Mo, so that the oxide can supply oxygen to oxygen defects in the dielectric ceramic. This matter restrains the Q value and the dielectric constant of the dielectric ceramic from being declined by the oxygen defects. Moreover, the oxygen defects deteriorate the temperature dependency of the resonance frequency of the dielectric ceramic; thus, the incorporation of the molybdenum oxide in the dielectric ceramic also makes it possible to restrain this deterioration in the temperature dependency.

The crystal containing La, Al, Ca and Ti is preferably a crystal having a perovskite structure. Any perovskite structure crystal has a $ABO_3$ type crystal structure wherein metal elements in sites A and sites B are regularly arranged. In a case where the number of oxygen defects is small therein, the lattice strain thereof is small so that the crystal gives a high Q value. When a dielectric ceramic contains La, Al, Ca and Ti, the site A atoms are composed of La and Ca and the site B atoms are composed of Al and Ti . The sites A and the sites B are regularly arranged. When the dielectric ceramic contains a molybdenum oxide, the molybdenum oxide releases oxygen; thus, the above-mentioned perovskite structure crystal becomes small in the number of oxygen defects. As a result, the lattice strain of the crystal structure turns small so that a high Q value is obtained.

When the composition formula of the dielectric ceramic of the present embodiment, which contains La, Al, Ca and Ti, is represented by $\alpha La_2O_x \cdot \beta Al_2O_3 \cdot \gamma CaO \cdot \delta TiO_2$ wherein $3 \leq X \leq 4$, the molar ratios $\alpha$, $\beta$, $\gamma$ and $\delta$ satisfy the following expressions (1) to (5) :

$$0.056 \leq \alpha \leq 0.214 \quad --- \quad (1)$$

$$0.056 \leq \beta \leq 0.214 \quad --- \quad (2)$$

$$0.286 \leq \gamma \leq 0.500 \quad --- \quad (3)$$

$$0.286 \leq \delta \leq 0.460 \quad --- \quad (4)$$

$$\alpha + \beta + \gamma + \delta = 1 \quad --- \quad (5)$$

According to this manner, the dielectric ceramic of the embodiment has excellent dielectric properties. Specifically, the dielectric constant ($\varepsilon r$) is large and the Q value is high.

When the expression of $0.056 \leq \alpha \leq 0.214$ is satisfied, the dielectric constant ($\varepsilon r$) of the dielectric ceramic becomes large and the Q value becomes high. When, in particular, the expression of $0.078 \leq \alpha \leq 0.187$ is satisfied, the excellent dielectric properties are more stably obtained.

When the expression of $0.056 \leq \beta \leq 0.214$ is satisfied, the dielectric constant ($\varepsilon r$) of the dielectric ceramic becomes large and the Q value becomes high. When, in particular, the expression of $0.078 \leq \beta \leq 0.187$ is satisfied, the excellent dielectric properties are more stably obtained.

When the expression of $0.286 \leq \gamma \leq 0.500$ is satisfied, the dielectric constant ($\varepsilon r$) of the dielectric ceramic becomes large and the Q value becomes high. When, in particular, the expression of $0.330 \leq \gamma \leq 0.470$ is satisfied, the excellent dielectric properties are more stably obtained.

When the expression of $0.286 \leq \delta \leq 0.460$ is satisfied, the dielectric constant ($\varepsilon r$) of the dielectric ceramic becomes large and the Q value becomes high. When, in particular, the expression of $0.350 \leq \delta \leq 0.460$ is satisfied, the excellent dielectric properties are more stably obtained.

Since the dielectric ceramic of the embodiment contains the molybdenum oxide, the dielectric properties are further improved. The reason would be as follows:

The dielectric ceramic of the embodiment contains, as main crystal phases thereof, $LaAlO_3$ and $CaTiO_3$. When the dielectric ceramic contains molybdenum, molybdenum oxide such as $MoO_2$, $MoO_3$ and $CaMoO_4$ is contained therein as secondary crystal phase. Since the molybdenum oxide releases oxygen with a change in the valence of Mo as described above, oxygen can be supplied to oxygen defects inside the dielectric ceramic. This matter makes the Q value of the dielectric ceramic high, and restrains a fall in the dielectric constant, and deterioration in the temperature dependency of the resonance frequency.

In the dielectric ceramic of the embodiment, the crystal of the molybdenum oxide is present in its crystal grain boundaries. The crystal of the molybdenum oxide is higher in mechanical strength than the main crystal containing $LaAlO_3$ and $CaTiO_3$. This improves the strength of the grain boundaries in the dielectric ceramic, and further makes it possible to restrain the growth of the crystal grains by pinning effect. As a result, the dielectric ceramic can be made better in mechanical strength than the prior art.

In the dielectric ceramic of the embodiment, the content of molybdenum is preferably set into the range of 0.001 to 1% by mass in terms of molybdenum oxide content. When the content is set into this range, the dielectric properties do not lower easily. When the molybdenum content by percentage is 0.001% by mass or more, oxygen is easily supplied to oxygen defects inside the dielectric ceramic. When the molybdenum content by percentage is 1% by mass or less, it is possible to restrain a fall in the dielectric properties that is based on a matter that the molybdenum oxide, which does not contribute to the supply of oxygen very much, is contained in a large amount in the crystal grain boundaries and others of a sintered body.

The molybdenum content in the dielectric ceramic is obtained by pulverizing the dielectric ceramic partially, dissolving the resultant powder into a solution such as hydrochloric acid, measuring the amount of Mo therein with an IPC emission spectral analyzer (ICPS-8100, manufactured by Shimadzu Corp.), and then converting this amount into a Mo oxide amount. The error based on the measuring device is represented by $n \pm \sqrt{n}$ wherein n denotes the analyzed value .

The dielectric ceramic of the embodiment may contain at least one of Mn, W, Nb and Ta as metal elements in a total amount of 0.01 % by mass to 3% by weight in terms of $MnO_2$, $WO_3$, $Nb_2O_5$ and $Ta_2O_5$ amounts, respectively. When one or more of Mn, W, Nb and Ta is incorporated in an amount of 0.01 to 3% by mass in terms of $MnO_2$, $WO_3$, $Nb_2O_5$ and $Ta_2O_3$ amounts, respectively, the Q value becomes higher.

It appears that Mn, W, Nb and Ta can contribute to a reduction in oxygen defects in the solid solution and further improve the Q value. In a method for measuring the respective contents of the components, in the same way as used to obtain the molybdenum content, the respective content of the components can be obtained by pulverizing the dielectric ceramic partially, dissolving the resultant powder into a solution such as hydrochloric acid, measuring the respective amounts of Mn, W, Nb and Ta with an IPC emission spectral analyzer (ICPS-8100, manufactured by Shimadzu Corp.), and then converting the amounts to amounts of respective oxides thereof, respectively. The error based on the measuring device is represented by $n \pm \sqrt{n}$ wherein n denotes the analyzed value.

When the dielectric ceramic of the embodiment is made into a member, it is preferred that the average void ratio in the surface thereof and at the inside thereof is 3% or less. When the average void ratio is set to 3% or less in the member surface and at the inside, a fall in the mechanical strength of the member can restrained and further a fall and a scattering in electrical properties thereof can be restrained. When the average void ratio is 3% or less, the density of the member does not lower and the strength of the member does not deteriorate remarkably. In this case, the member is not easily chipped, cracked or broken by impact or some other applied when the member is handled or drops, when the member is set into a resonator, or after the member is set up in each station. More preferably, the average void ratio is set to 1% or less. In this case, the mechanical properties and electrical properties are stabilized.

The average void ratio is calculated out by taking photographs or images of the surface of the member and an internal section thereof with a metal microscope, SEM or the like that gives a magnification adjustable in such a manner that, for example, an area of 100 μm x 100 μm is observable, and then analyzing the photographs or images through, an image analyzer. The image analyzer may be, for example, an analyzer, LUZEX-FS, manufactured by Nireco Corp.

It is desirable that the proportion of polycrystal containing at least La, Al, Ca and Ti as metal elements in crystals contained in the dielectric ceramic of the embodiment is 90% by volume or more. When the proportion is 90% by volume or more, the value of the dielectric constant can be maintained and an increase in dielectric loss can be restrained.

The dielectric ceramic of the embodiment desirably contains at least rare earth element, La, Al, Ca and Ti in a total amount of 85% by mass or more in terms of $La_2O_x$ ($3 \leq X \leq 4$), $Al_2O_3$, $CaCO_3$ and $TiO_2$ amounts, respectively. Furthermore, the crystal made of these main components is desirably a perovski te crystal composed of a solid solution of $LaAlO_{(x+3)/2}$ ($3 \leq X \leq 4$) and $CaTiO_3$.

In the dielectric ceramic of the embodiment, the lattice strain is preferably 0.3% or less to improve the Q value, and is more preferably 0.2% or less to improve the Q value further.

In the embodiment, thermal treatment is conducted in a high-temperature and high-pressure atmosphere containing oxygen as in a manufacturing process thereof that will be described bellow. This manner makes it possible to arrange the sites A, the sites B and oxygen atoms regularly of the perovskite structure. According to this manufacturing method, oxygen defects are reduced, thereby making it possible to yield a dielectric ceramic small in lattice strain.

The following describes methods for manufacturing the embodiment in detail. In a first manufacturing method thereof, for example, the following steps (1) to (7) are performed.

(First Manufacturing Method)

(1) As starting materials, prepared are respective powders of high-purity lanthanum oxide ($La_2O_3$), high-purity aluminum oxide ($Al_2O_3$), calcium carbonate ($CaCO_3$), and titanium oxide ($TiO_2$). Thereafter, $La_2O_3$ and $Al_2O_3$ are first weighed out to give a desired ratio. Thereto is added pure water, and these are wet-mixed and pulverized with a ball mill using zirconia balls or the like for 1 to 100 hours until the average particle diameter of the mixed, material of $La_2O_3$ and $Al_2O_3$ turns to 2.0 $\mu$m or less. In this way, a mixture is yielded. In parallel therewith, the same step is performed, about $CaCO_3$ and $TiO_2$ to yield another mixture (primary formulation).

(2) Next, the mixture are each dried, and calcined at 1100 to 1300°C for 1 to 10 hours to yield calcined products of $LaAlO_3$ and $CaTiO_3$.

(3) Next, the calcined products of $LaAlO_3$ and $CaTiO_3$ yielded in the step (2) are each wet-pulverized into an average particle diameter of 1 to 2 $\mu$m with a ball mill or the like. The resultant mixtures in a slurry form are each transferred into a stainless steel container, and dried. The dried calcined products of $LaAlO_3$ and $CaTiO_3$ are each passed through a mesh to yield raw materials $LaAlO_3$ and $CaTiO_3$.

(4) Next, the raw materials $LaAlO_3$ and $CaTiO_3$ yielded in the step (3) are weighed out into a desired ratio to yield a mixture of $LaAlO_3$ and $CaTiO_3$. A high-purity molybdenum oxide ($MoO_3$) having an average particle diameter of 0.5 to 3 $\mu$m, which is weighed out in a desired proportion, is mixed with the above-mentioned mixture. Thereto is then added pure water, and then these components are wet-mixed with a ball mill using zirconia balls or the like to prepare a slurry (secondary formulation).

In the case of yielding a dielectric ceramic containing at least one of Mn, W, Nb and Ta finally, at least one of Mn, W, Nb and Ta is added at the time of the wet-mixing in the secondary formulation. Raw materials to be added may be, for example, manganese dioxide ($MnO_2$), tungsten oxide ($WO_3$), niobium oxide ($Nb_2O_5$), and tantalum oxide ($Ta_2O_3$) which are each commercially available and each have an average particle diameter of 2 $\mu$m or less.

(5) Next, to the slurry yielded in the step (4) is added a binder at a proportion of 3 to 10% by weight. These are wet-mixed with a ball mill and then are dehydrated. Thereafter, the dehydrated mixture is granulated or particle-sized by, for example, spray drying. The resultant grains are shaped into any shape by, for example, mold pressing, cold isostatic pressing, or extrusion moulding. The form of the grains may a form of a solid, such as powder, or a form of a mixture of a solid and a liquid, such as slurry. In this case, the liquid may be a liquid other than water, for example, IPA (isopropyl alcohol), methanol, ethanol, toluene or acetone.

(6) Next, the green body yielded in the step (5) is kept in the atmosphere at 1500 to 1700°C for 5 to 10 hours to be sintered. The sintering at 1550 to 1650°C is more preferable, since mechanical properties of the dielectric ceramic can be improved.

(7) Next, the resultant sintered body may be further subjected to heat treatment at a temperature of 1500 to 1700°C and a pressure of 300 to 3000 atm. in a gas containing 5 to 30% by volume of oxygen for 1 minute to 100 hours. In this case, voids in the surface of the sintered body can be decreased and the sintered body be made denser. More preferably, the body is subjected to heat treatment at a temperature of 1550 to 1650°C and a pressure of 1000 to 2500 atm. for 20 minutes to 3 hours.

When the average particle diameter of $LaAlO_3$ is 1 $\mu$m or more in the step (3), it does not occur that the contact area thereof with the $CaTiO_3$ articles increases so that the generation of a solid solution advances excessively. As a result, the Q value and other dielectric properties are not easily declined, and the period for the pulverization and manufacturing costs can be decreased. When the average particle diameter of $LaAlO_3$ is 2 $\mu$m or less, the generation of a solid solution reversely advances without decreasing the contacting area thereof with the $CaTiO_3$ particles, so that a decline in the Q value and the other dielectric properties can be restrained. About the $CaTiO_3$ also, it is advisable to set the average particle diameter into the range of 1 to 2 $\mu$m for the same reason.

Even when the steps (1) to (4) are simplified in the first manufacturing method, the dielectric ceramic of the embodiment can be manufactured. Specifically, in the primary formulating step (1), high-purity lanthanum oxide ($La_2O_3$), high-purity aluminum oxide ($Al_2O_3$), calcium carbonate ($CaCO_3$) and titanium oxide ($TiO_2$), and high-purity molybdenum oxide ($MoO_3$) are weighed and mixed at a desired ratio. Thereto is added pure water, and then these components are wet-mixed with a ball mill using zirconia balls or the like for 1 to 100 hours until the average particle diameter of the mixed materials turns into 2 $\mu$m or less. In this way, slurry is prepared. Steps after this step are manufacturing steps identical with the step (5). In this way, the dielectric ceramic of the embodiment can be yielded.

According to this manufacturing method, the manufacturing steps (1) to (4) of yielding the calcined product of $LaAiO_3$ and $CaTiO_3$ and pulverizing these products can be simplified. Thus, the dielectric ceramic of the embodiment can be manufactured at lower costs.

At the time of the first mixing, lanthanum oxide and the like may be mixed with at least one of ytterbium oxide ($Yb_2O_3$) and cerium oxide ($Ce_2O3$), and bismuth oxide ($Bi_2O_3$). Thereinto may be incorporated at least one of manganese dioxide ($MnO_2$), tungsten oxide ($WO_3$), niobium oxide ($Nb_2O_5$), and tantalum oxide ($Ta_2O_5$).

(Second Manufacturing Method)

Next, a description is made about the case of adding manganese tungstate ($MnWO_4$) or manganese titanate ($MnTiO_3$) instead of the molybdenum oxide.

(1) As starting materials, prepared are respective powders of high-purity lanthanum oxide ($La_2O_3$), high-purity aluminum oxide ($Al_2O_3$), calcium carbonate ($CaCO_3$), and titanium oxide ($TiO_2$). Thereafter, $La_2O_3$ and $Al_2O_3$ are first weighed out to give a desired ratio therebetween. Thereto is added pure water, and these oxides are wet-mixed and pulverized with a ball mill using zirconia balls or the like for 1 to 100 hours until the average particle diameter of the mixed material of $La_2O_3$ and $Al_2O_3$ turns to 2.0 $\mu$m or less. In this way, a mixture was yielded. In parallel therewith, the same step is performed about $CaCO_3$ and $TiO_2$ to yield another mixture (primary formulation).

(2) Next, the mixtures are each dried, and calcined at 1100 to 1300°C for 1 to 10 hours to yield calcined products of $LaAlO_3$ and $CaTiO_3$.

(3) Next, the calcined products of $LaAlO_3$ and $CatiO_3$ yielded in the step (2) are each wet-pulverized into an average particle diameter of 1 to 2 $\mu$m with a ball mill or the like. The resultant mixtures in a slurry form are each transferred into a stainless steel container, and dried. The dried calcined products of $LaAlO_3$ and that of $CaTiO_3$ are each passed through a mesh to yield raw materials of $LaAlO_3$ and $CaTiO_3$.

(4) Next, the raw materials $LaAlO_3$ and $CaTiO_3$ yielded in the step (3) are weighed out into a desired ratio to yield a mixture of $LaAlO_3$ and $CaTiO_3$. A high-purity manganese tungstate ($MnWO_4$) or manganese titanate ($MnTiO_3$) having an average particle diameter of 0.5 to 3 $\mu$m is weighed out, and is mixed with the above-mentioned mixture at a desired proportion. Thereto is then added pure water, and then these components are wet-mixed with a ball mill using zirconia balls or the like to prepare a slurry (secondary formulation).

In the case of yielding a dielectric ceramic containing at least one of Yb and Ce and further containing Bi finally, at least one of Yb and Ce, and Bi are added at the time of the wet-mixing in the secondary formulation. Raw materials to be added may be, for example, ytterbium oxide ($Yb_2O3$), cerium oxide ($Ce_2O_3$), and bismuth oxide ($Bi_2O_3$) which are each commercially available and each have an average particle diameter of 2 $\mu$m or less.

(5) Next, to the slurry yielded in the step (4) is added a binder at a proportion of 3 to 10% by weight. These components are wet-mixed with a ball mill and then the mixture is dehydrated. Thereafter, the dehydrated mixture is granulated or particle-sized by, for example, spray drying. The resultant grains are shaped into any shape by, for example, mold pressing, cold isostatic pressing, or extrusion molding. The form of the grains may a form of a solid, such as powder, or a form of a mixture of a solid and a liquid, such as slurry. In this case, the liquid may be a liquid other than water, for example, IPA (isopropyl alcohol), methanol, ethanol, toluene or acetone.

(6) Next, the green body yielded in the step (5) is kept in the atmosphere at 1500 to 1700°C for 5 to 10 hours to be sintered. The sintering at 1550 to 1650°C is more preferable, since mechanical properties of the dielectric ceramic can be improved.

(7) Next, the resultant sintered body may be further subjected to heat treatment at a temperature of 1500 to 1700°C and a pressure of 300 to 3000 atm. in a gas containing 5 to 30% by volume of oxygen for 1 minute to 100 hours. In this case, voids in the surface of the sintered body can be decreased and sintered body be made denser. More preferably, the body is subjected to heat treatment at a temperature of 1550 to 1650°C and a pressure of 1000 to 2500 atm. for 20 minutes to 3 hours.

When the average particle diameter of $LaAlO_3$ is 1 $\mu$m or more in the step (3), it does not occur that the contact area thereof with the $CaTiO_3$ particles increases so that the generation of a solid solution advances excessively. As a result, the Q value and other dielectric properties are not easily declined, and the period for the pulverization and manufacturing costs can be decreased. When the average particle diameter of $LaAlO_3$ is 2 $\mu$m or less, the generation of a solid solution reversely advances without decreasing the contacting area thereof with the $CaTiO_3$ particles, so that a decline in the Q value and the other dielectric properties can be restrained. About the $CaTiO_3$ also, it is advisable to set the average particle diameter into the range of 1 to 2 $\mu$m for the same reason.

In the step (4), it is preferred that manganese tungstate or manganese titanate is incorporated in a content of 0.01 to 3% by mass. When the content is set into this range, the dielectric properties do not lower easily. When the content of manganese tungstate or manganese titanium is 0.01% by mass or more, oxygen is more easily supplied into oxygen defects in the dielectric ceramic. When the content by percentage of manganese tungstate or manganese titanium is 3% by mass or less, it is possible to restrain a fall in the dielectric properties that is based on a matter that manganese tungstate or manganese titanate, which does not contribute to the supply of oxygen very much, is contained in a large amount in the crystal grain boundaries and others of the sintered body.

When manganese tungstate is incorporated in the step (4), the finally yielded dielectric ceramic contains, for example, $WO_3$, $CaWO_4$, $MnWO_4$, $Al(WO_4)_3$, $MnO_2$ and other oxide species. When manganese titanate is incorporated in the step (4), the finally yielded dielectric ceramic contains, for example, $TiO_2$, $MnO_2$, and other oxides. As described just above, the component Mn contained in manganese tungstate or manganese titanate is present in the form of the above-mentioned oxide, such as $MnO_2$, in the dielectric ceramic. The manganese oxide releases oxygen with a change in the valence of Mn so that oxygen can be supplied to oxygen defects inside the dielectric ceramic. This matter makes the Q value of the dielectric ceramic high, and restrains a fall in the dielectric constant thereof, and deterioration in the temperature dependency of the resonance frequency.

When manganese tungstate or manganese titanate is contained in the step (4), manganese tungstate or manganese titanate may remain in the finally yielded dielectric ceramic. In this case, the dielectric ceramic contains, in its crystal grain boundaries, crystals of manganese tungstate and manganese titanate. The crystals of manganese tungstate and manganese titanate are higher in mechanical strength than the main crystal containing $LaAlO_3$ and $CaTiO_3$. Thus, This matter improves the strength of the grain boundaries of the dielectric ceramic, and further makes it possible to restrain the growth of the crystal grains by pinning effect. As a result, the dielectric ceramic can be made better in mechanical strength than the prior art.

The content by percentage of manganese tungstate or manganese titanate in the dielectric ceramic is obtained by pulverizing the dielectric ceramic partially, dissolving the resultant powder into a solution such as hydrochloric acid, measure the amounts of W, Mn and Ti therein with an IPC emission spectral analyzer (ICPS-8100, manufactured by Shimadzu Corp.), and then converting the amounts into amounts of respective oxides thereof. In particular, about the Ti amount, the amount of Ca is also measured at the same time, and from the ratio of Ca/Mn, the amount of manganese titanate can be specified. The error based on the measuring device is represented by $n \pm \sqrt{n}$ wherein n denotes the analyzed value.

In the case of incorporating manganese tungstate or manganese titanate in the step (4), further at least one of Yb and Ce, and Bi may be incorporated thereinto. Bi may be incorporated at an amount of 0.005 to 0.3% by mass in terms of $Bi_2O_3$ amount. In this case, a dielectric ceramic can be manufactured which has a higher dielectric constant, a more stable temperature dependency of the resonance frequency, and a better strength than in the prior art.

The reason why the dielectric constant of the dielectric ceramic can be further improved is that any one of Yb and Ce is present in the form of an oxide in the dielectric ceramic and the oxide supplies oxygen into the oxygen defects, thereby making it possible to realize a dielectric ceramic in which the oxygen defects is smaller.

The addition of Bi makes the temperature dependency of the resonance frequency stable. Even when Bi is added in the form of any one of combinations of Bi with Yb, of Bi with Ce, and of Bi with Yb and Ce, an improvement in the dielectric constant is expected and a stable temperature characteristic of the resonance frequency is obtained.

The reason why the addition amount of Bi is set into the range of 0.005 to 0.3% by mass in terms of $Bi_2O_3$ amount is as follows : when the amount is 0.01% by mass or more, the temperature coefficient τf and the stability thereof can be improved ; and when the amount is 0.3% or less by mass, the dielectric constant εr and the Q value hardly lower.

At least one of Yb and Ce, and Bi may be contained in a total amount of 0.010% to 3% by mass in terms of $Yb_2O_3$ amount, $Ce_2O_3$ amount and $Bi_2O_3$ amount, respectively. When the total amount of Yb and Ce plus Bi is from 0.010 to 3% by mass in this manner, the dielectric constant εr and the Q value of the finally obtained dielectric ceramic become higher.

The respective addition amounts of Yb, Ce and Bi can be determined by either a method of cutting out the dielectric ceramic partially by mechanical working, pulverizing this cut ceramic piece into a powdery form, and then determining the element amounts with an ICP emission spectral analyzer (ICPS-8100 model, manufactured by Shimadzu Corp.) ; or a method of enlarging and observing the surface of the dielectric ceramic at a magnification of 5000 to 20000 through a transmission electron microscope, analyzing any positions thereof through an energy dispersive X ray diffractometer, and gaining the mass ratio between the individual components from the respective count numbers of the elements in each of the positions.

Even when the steps (1) to (4) are simplified in the second manufacturing method, the dielectric ceramic, which has excellent dielectric properties, can be manufactured. Specifically, in the primary formulating step (1), high-purity lanthanum oxide ($La_2O_3$), high-purity aluminum oxide ($Al_2O_3$), calcium carbonate ($CaCO_3$) and titanium oxide ($TiO_2$), and high-purity manganese tungstate ($MnWO_4$) or manganese titanate ($MnTiO_3$) are weighed and mixed with each other at a desired ratio. Thereto is added pure water, and then these components are wet-mixed with each other with a ball mill using zirconia balls or the like for 1 to 100 hours until the average particle diameter of the mixed materials turns into 2 μm or less. In this way, slurry is prepared. Steps after this step are manufacturing steps identical with the step (5). By this manufacturing method, the dielectric ceramic, which is excellent in dielectric properties, can be yielded.

According to this manufacturing method, the manufacturing steps (1) to (4) of yielding calcined products of $LaAiO_3$ and $CaTiO_3$ and pulverizing these products can be simplified. Thus, the dielectric ceramic can be manufactured at lower costs.

The reason why the manufacturing steps of (1) to (4) can be simplified is as follows: if the dielectric ceramic contains manganese alone, a Mn-Al compound is easily produced by heating, and the produced Mn-Al compound easily causes a fall in the dielectric properties; however, according to this manufacturing method, at the initial stage of mixing the raw materials with each other, manganese is present in the form of manganese tungstate or manganese titanate; thus, even when manganese is mixed with lanthanum oxide ($La_2O_3$) and aluminum oxide ($Al_2O_3$), the production of the Mn-Al compound is restrained; therefore, at the time of mixing the manganese component with the La component and the Al component, it is unnecessary to form a calcined product of $LaAlO_3$ once, so that the manufacturing process can be simplified.

The following describes an example of a dielectric resonator using the dielectric ceramic of the embodiment. A TE mode dielectric resonator 1 illustrated in Fig. 1 has a metallic case 2, an input terminal 3 and an output terminal 4 set up at positions of an inner wall of the metallic case 2 that are opposed to each other, and a dielectric member 5 sandwiched between the input and output terminal 3 and the output terminal 4. The metallic case 2 is made of a light metal such as aluminum. The dielectric member 5 is made of the above-mentioned dielectric ceramic, and is used as a filter. In the dielectric resonator 1, microwaves are inputted into the input terminal 3, so that the microwaves are confined inside the dielectric member 5 by refection on the boundary between the dielectric member 5 and the free space. As a result, resonance is caused at specified frequencies. The resonant signals are electromagnetically coupled with the output terminal 4 to be outputted to the outside of the metallic case 2.

Of course, the dielectric ceramic of the embodiment may be applied to a coaxial resonance, a strip line resonance, a dielectric porcelain resonator, and any other resonator, the situation of which is not illustrated.

Furthermore, the input terminal 3 and the output terminal 4 may be directly set up on the dielectric member 5.

The dielectric member 5 is a resonating medium made of the dielectric ceramic of the embodiment, and having a predetermined shape. The shape is sufficient to be a rectangular parallelepiped, cubic, plate, circular, columnar or polygonally prismatic shape, or any three-dimensional shape capable of generating resonance. The frequency of high-frequency signals to be inputted is from about 500 MHz to 500 GHz, and the resonance frequency is preferably from about 2 to 80 GHZ from the viewpoint of practical use.

Thus, the dielectric ceramic of the embodiment can be used suitably as a material for various resonators used in relay stations for portable telephones, and BS antennas. When a dielectric ceramic having a high Q value, such as the dielectric ceramic of the embodiment, is used for a dielectric resonator, energy loss can be made very low and the power consumption can be made low.

The dielectric ceramic of the embodiment may be used as a dielectric substrate material for MICs (Monolithic ICs), a material for dielectric waveguides, a dielectric material for stacked type ceramic condensers, or some other as well as a material for various resonators.

**EXAMPLES**

<Example 1>

Samples were produced by varying values of the molar ratios $\alpha$, $\beta$, $\gamma$ and 6 in a La-Al-Ca-Ti based material and the amount of an molybdenum oxide ($MoO_3$). A test was then made for measuring the dielectric constant $\varepsilon r$ and the Q value of each of the samples. Details of the method for manufacturing and methods for measuring the characteristics are explained below.

As starting materials, prepared were $La_2O_3$, $Al_2O_3$, $CaCO_3$, and $TiO_2$, each of which had a purity of 99.5% or more by mass.

The individual materials were weighed out to set the ratio therebetween to each ratio shown in Table 1, and then the components $La_2O_3$ and $Al_2O_3$, and the components $CaCO_3$ and $TiO_2$ were put into ball mills different from each other, respectively. Pure wafer was added to each of the mills, and the components therein were wet-mixed and pulverized. In this step, the wet-mixing and the pulverization, were performed in the ball mill, using zirconia balls, until the average particle diameter of the mixture turned to 2 $\mu m$ or less. By this primary mixing, two mixtures, i.e. a mixture of $La_2O_3$ and $Al_2O_3$, and a mixture of $CaCO_3$ and $TiO_2$, were yielded.

The individual mixtures were dried and then calcined at 1200 °C to yield calcined products of $LaAlO_3$ and $CaTiO_3$.

Ball mills were used to wet-pulverize the resultant two calcined products to turn each of the average particle diameters of $CaTiO_3$ and $LaAlO_3$ into the range of 1 to 2 $\mu m$.

These were mixed with each other, and thereto was added a commercially available molybdenum oxide, $MoO_3$, which had an average particle diameter of 1 $\mu m$ as a molybdenum component. Thereto was added pure water, and then a ball mill using zirconia balls and the like was used to wet-mix the components for 1 to 100 hours. By this secondary formulation, several slurries were yielded.

To each of these slurries was further added a binder at a proportion of 1 to 10% by mass, and were mixed for a predetermined time. Thereafter, these slurries were each spray-granulated with a spray drier to yield a secondary raw material. The secondary raw material was shaped into a column form having a diameter of 20 mm and a height of 15 mm by mold pressing. In this way, each of green bodies was obtained.

The resultant green bodies were kept in the atmosphere at 1500 to 1700°C for 10 hours so as to be sintered, thereby yielding samples Nos. 1 to 30. About each of the samples, after the sintering, its upper and lower surfaces and its side surfaces were partially polished, and the sample was washed in acetone by ultrasonic waves.

Next, about each of these samples, dielectric properties were measured. Specifically, the dielectric constant εr and the Q value were measured at a measuring frequency of 800 MHz by the rod resonator method. About the Q value, the resultant value was converted to the Q value at 1 GHz from a relationship that " (Q value) x (measuring frequency f) = a constant value", which is generally satisfied for microwave dielectrics.

Results obtained in the above-mentioned manner are shown in Table 1. The addition amount of Mo was measured by partially, pulverizing the dielectric ceramic, and then measuring the amount of Mo with an IPC emission spectral analyzer (ICPS-8100, manufactured by Shimadzu Corp.), and changing the value into oxide (MoO$_3$) amount. From the resultant total amount, the addition amount of Mo was gained. The symbol "*" in Table 1 represents a comparative example.

[Table 1]

| Sample No. | La$_2$O$_3$ | Al$_2$O$_3$ | CaO | TiO$_2$ | MoO3 (mass %) | Dielectric Properties | |
|---|---|---|---|---|---|---|---|
| | α | β | γ | δ | | ε r | Q value |
| 1 | 0. 055 | 0.057 | 0.442 | 0.446 | 0.1 | 38.9 | 38000 |
| 2 | 0.056 | 0.056 | 0.442 | 0.446 | 0.1 | 40.3 | 43000 |
| 3 | 0.078 | 0.078 | 0.422 | 0.422 | 0.1 | 41.5 | 54000 |
| 4 | 0.187 | 0.183 | 0.315 | 0.315 | 0.1 | 43.0 | 57000 |
| 5 | 0.214 | 0.214 | 0.286 | 0.286 | 0.1 | 43.2 | 51000 |
| 6 | 0.215 | 0.213 | 0.286 | 0.286 | 0.1 | 39.2 | 39000 |
| 7 | 0.057 | 0.055 | 0.442 | 0.446 | 0.1 | 39.0 | 28000 |
| 8 | 0.056 | 0.056 | 0.442 | 0.446 | 0.1 | 43.5 | 52000 |
| 9 | 0.185 | 0.187 | 0.314 | 0.314 | 0.1 | 43.7 | 61000 |
| 10 | 0.214 | 0.214 | 0.286 | 0.286 | 0.1 | 41.0 | 48000 |
| 11 | 0.213 | 0.215 | 0.286 | 0.286 | 0.1 | 37.8 | 34000 |
| 12 | 0.214 | 0.214 | 0.285 | 0.287 | 0.1 | 39.7 | 38000 |
| 13 | 0.214 | 0.214 | 0.286 | 0.286 | 0.1 | 40.8 | 42000 |
| 14 | 0.170 | 0.170 | 0.330 | 0.330 | 0,1 | 42.0 | 51000 |
| 15 | 0.060 | 0.060 | 0.470 | 0.410 | 0.1 | 43.5 | 61500 |
| 16 | 0.170 | 0.170 | 0.320 | 0.340 | 0.1 | 42.5 | 52000 |
| 17 | 0.056 | 0.056 | 0.500 | 0.388 | 0.1 | 41.5 | 45000 |
| 18 | 0.056 | 0.056 | 0.510 | 0.378 | 0.1 | 39.6 | 29000 |
| 19 | 0. 060 | 0.060 | 0.430 | 0.450 | 0.1 | 43.7 | 62000 |
| 20 | 0.214 | 0.135 | 0,361 | 0.290 | 0.1 | 40.8 | 40000 |
| 21 | 0.214 | 0.135 | 0.421 | 0.230 | 0.1 | 39.2 | 27000 |
| 22 | 0.056 | 0.056 | 0.428 | 0.460 | 0.1 | 42.8 | 52000 |
| 23 | 0.056 | 0.056 | 0.418 | 0.470 | 0.1 | 39.5 | 38000 |
| 24 | 0.135 | 0.125 | 0.390 | 0.350 | 0.0005 | 40.9 | 51000 |
| 25 | 0.135 | 0,125 | 0.390 | 0.350 | 0.001 | 41.5 | 64000 |
| 26 | 0.135 | 0.125 | 0.390 | 0.350 | 0.05 | 42.0 | 62000 |
| 27 | 0. 135 | 0.125 | 0.390 | 0.350 | 0.50 | 44.2 | 59000 |
| 28 | 0.135 | 0.125 | 0.390 | 0.350 | 1.00 | 41.3 | 56000 |
| 29 | 0.135 | 0.125 | 0.390 | 0.350 | 1.10 | 40.2 | 50000 |
| *30 | 0.135 | 0.125 | 0.390 | 0.350 | 0.00 | 37.8 | 26000 |

As shown in Table 1, sample No. 30, which no molybdenum; was added, gave a dielectric constant εr less than 40, and a Q value less than 40,000.

About samples Nos. 1, 6, 7, 11, 12, 18, 21, and 23, α, β, γ and δ in the composition formula of αLa₂Oₓ·βAl₂O₃·γCaO·δTiO₂ did not satisfy the above-mentioned expressions (1) to (5); thus, the samples each gave a dielectric constant εr less than 40, and a Q value less than 40,000.

It was verified that in contrast to these samples, samples Nos. 2 to 5, 8 to 10, 13 to 17, 19, 20, 22, and 24 to 29 each gave a dielectric constant εr of 40 or more, and a Q value of 40,000 or more.

About the samples satisfying the expressions (1) to (5), the following tendencies were found out: their Q values were stably higher as the value of each of α, β, γ and δ was closer to the middle value between the upper limit and the lower limit thereof; and their Q values were lower as the value of at least one of α, β, γ and δ was closer to the upper limit or the lower limit.


<Example 2>

Next, samples were produced by varying values of the molar ratios α, β, γ and δ in a La-Al-Ca-Ti based material and the amounts of manganese tungstate (MnWO₄) to be added thereto. A test was then made for measuring the dielectric constant εr and the Q value of each of the samples.

Results obtained in this way are shown in Table 2.

About the producing method, the samples were produced in the same way as in Example 1 except that manganese tungstate (MnW0₄) was added instead of molybdenum oxide (MoO₃).

The individual dielectric properties were also measured in the same way as in Example 1.

The addition amount of manganese tungstate was measured by partially pulverizing the dielectric ceramic, and then measuring the amounts of W and Mn with the IPC emission spectral analyzer (ICPS-8100, manufactured by Shimadzu Corp.), and changing the value into oxide (MnN0₄) amount. From the resultant total amount, the addition amount was gained. The symbol "*" in Table 2 represents a comparative example.

[Table 2]

| Sample No. | La₂O₃ | Al₂O₃ | CaO | TiO₂ | MnWO₄ | Dielectric Properties | |
|---|---|---|---|---|---|---|---|
| | α | β | γ | δ | (mass%) | ε r | Q value |
| 31 | 0.055 | 0.057 | 0.442 | 0.446 | 0.100 | 39.0 | 37000 |
| 32 | 0.056 | 0.056 | 0.442 | 0.446 | 0.100 | 40.5 | 43500 |
| 33 | 0.078 | 0.078 | 0.422 | 0.422 | 0.100 | 41.8 | 55000 |
| 34 | 0.187 | 0.183 | 0.315 | 0.315 | 0.100 | 43.5 | 58000 |
| 35 | 0.214 | 0.214 | 0.286 | 0.286 | 0.100 | 43.1 | 52000 |
| 36 | 0.215 | 0.213 | 0.286 | 0.286 | 0.100 | 39.5 | 38500 |
| 37 | 0.057 | 0.055 | 0.442 | 0.446 | 0.100 | 42.0 | 29000 |
| 38 | 0.056 | 0.056 | 0.442 | 0.446 | 0.100 | 43.0 | 53000 |
| 39 | 0.185 | 0.187 | 0.314 | 0.314 | 0.100 | 43.7 | 60000 |
| 40 | 0.214 | 0.214 | 0.286 | 0.286 | 0.100 | 41.2 | 48500 |
| 41 | 0.213 | 0.215 | 0.286 | 0.286 | 0.100 | 38.0 | 35000 |
| 42 | 0.214 | 0.214 | 0.285 | 0.287 | 0.100 | 39.5 | 39000 |
| 43 | 0.214 | 0.214 | 0.286 | 0.286 | 0.100 | 41.0 | 43000 |
| 44 | 0.170 | 0.170 | 0.330 | 0.330 | 0.100 | 42.5 | 53000 |
| 45 | 0.060 | 0.060 | 0.470 | 0.410 | 0.100 | 43.9 | 62000 |
| 46 | 0.056 | 0.056 | 0.500 | 0.388 | 0.100 | 41.5 | 44500 |
| 47 | 0.056 | 0.056 | 0.510 | 0.378 | 0,100 | 39.8 | 29500 |
| 48 | 0.214 | 0.135 | 0.361 | 0.290 | 0.100 | 40.5 | 40500 |

(continued)

| Sample No. | La$_2$O$_3$ | Al$_2$O$_3$ | CaO | TiO$_2$ | MnWO$_4$ (mass%) | Dielectric Properties | |
|---|---|---|---|---|---|---|---|
| | α | β | γ | δ | | ε r | Q value |
| 49 | 0.214 | 0.135 | 0.421 | 0.230 | 0.100 | 39.3 | 28000 |
| 50 | 0.060 | 0.060 | 0,430 | 0.450 | 0.100 | 43.8 | 63000 |
| 51 | 0.056 | 0.056 | 0.428 | 0.460 | 0.100 | 43.0 | 52500 |
| 52 | 0.056 | 0.056 | 0.418 | 0.470 | 0.100 | 39.7 | 43000 |
| 53 | 0.135 | 0.125 | 0.390 | 0.350 | 0.005 | 40.4 | 50000 |
| 54 | 0.135 | 0.125 | 0.390 | 0.350 | 0.010 | 41.2 | 65000 |
| 55 | 0.135 | 0.125 | 0.390 | 0.350 | 0.500 | 42.2 | 63000 |
| 56 | 0.135 | 0.125 | 0.390 | 0.350 | 1.500 | 44.0 | 60000 |
| 57 | 0.135 | 0.125 | 0.390 | 0.350 | 3.000 | 41.5 | 58000 |
| 58 | 0.135 | 0.125 | 0.390 | 0.350 | 3.100 | 40.2 | 51000 |
| *59 | 0.135 | 0.125 | 0.390 | 0.350 | 0.000 | 37.5 | 25000 |

As shown in Table 2, sample No. 59, which no manganese tungstate was added, gave a dielectric constant εr less than 40, and a Q value less than 40,000.

About samples Nos. 31, 36, 37, 41, 42, 47, 49 and 52, α, β, γ and δ in the composition formula of αLa$_2$O$_x$·βAl$_2$O$_3$·γCaO-δTiO$_2$ did not satisfy the above-mentioned expressions (1) to (5) ; thus, the samples each gave a dielectric constant εr less than 40, and a Q value less than 40,000.

It was verified that in contrast to the above-mentioned samples, samples Nos. 32 to 35, 38 to 40, 43 to 46, 48, 50, 51 and 53 to 58 each gave a dielectric constant εr of 40 or more, and a Q value of 40,000 or more.

About the samples satisfying the expressions (1) to (5), the following tendencies were found out: their Q values were stably higher as the value of each of α, β, γ and δ was closer to the middle value between the upper any the lower limit thereof; and their Q values were lower as the value of at least one of α, β, γ and δ was closer to the upper limit or the lower limit.

<Example 3>

Next, samples were produced by varying values of the molar ratios α, β, γ and δ in a La-Al-Ca-Ti based material and the amount of manganese titanate (MnTiO$_3$) to be added thereto. A test was then made for measuring the dielectric constant εr and the Q value of each of the samples.

Results obtained in this way are shown in Table 3.

About the producing method, the samples were produced in the same way as in Example 1 except that manganese titanate (MnTiO$_3$) was added instead of molybdenum oxide (MoO$_3$).

The individual dielectric properties were also measured in the same way as in Example 1.

About the addition amount of manganese tungstate, the dielectric ceramic was partially pulverized, and then measuring the amounts of Mn and Ti with the IPC emission spectral analyzer (ICPS-8100, manufactured by Shimadzu Corp.), and changing the value into oxide (MnTiO$_3$) amount. From the resultant total amounts, the addition amounts were gained. The symbol "*" in Table 3 represents a comparative example.

[Table 3]

| Sample No. | La$_2$O$_3$ | Al$_2$O$_3$ | CaO | TiO$_2$ | MnTiO$_3$ (mass%) | Dielectric Properties | |
|---|---|---|---|---|---|---|---|
| | α | β | γ | δ | | ε r | Q value |
| 60 | 0.055 | 0.057 | 0.442 | 0.446 | 0.100 | 38.8 | 35700 |
| 61 | 0.056 | 0.056 | 0.442 | 0.446 | 0.100 | 40.2 | 41200 |
| 62 | 0.078 | 0.078 | 0.422 | 0.422 | 0.100 | 41.1 | 50000 |
| 63 | 0.187 | 0.183 | 0.315 | 0.315 | 0.100 | 42.8 | 56000 |

(continued)

| Sample No. | La$_2$O$_3$ | Al$_2$O$_3$ | CaO | TiO$_2$ | MnTiO$_3$ | Dielectric Properties | |
|---|---|---|---|---|---|---|---|
| | $\alpha$ | $\beta$ | $\gamma$ | $\delta$ | (mass%) | $\varepsilon$ r | Q value |
| 64 | 0.214 | 0.214 | 0.286 | 0.286 | 0.100 | 42.5 | 49000 |
| 65 | 0.215 | 0.213 | 0.286 | 0.286 | 0.100 | 39.2 | 37800 |
| 66 | 0.057 | 0.055 | 0.442 | 0.446 | 0.100 | 41.5 | 27900 |
| 67 | 0.056 | 0.056 | 0.442 | 0.446 | 0.100 | 42.7 | 52100 |
| 68 | 0.185 | 0.187 | 0.314 | 0.314 | 0.100 | 43.2 | 58000 |
| 69 | 0.214 | 0.214 | 0.286 | 0.286 | 0.100 | 40.8 | 46500 |
| 70 | 0.213 | 0.215 | 0.286 | 0.286 | 0.100 | 37.6 | 34100 |
| 71 | 0.214 | 0.214 | 0.285 | 0.287 | 0.100 | 39.1 | 37600 |
| 72 | 0.214 | 0.214 | 0.286 | 0.286 | 0.100 | 40.7 | 40500 |
| 73 | 0.170 | 0.170 | 0.330 | 0.330 | 0.100 | 41.8 | 51000 |
| 74 | 0.060 | 0.060 | 0.470 | 0.410 | 0.100 | 43.3 | 59000 |
| 75 | 0.056 | 0.056 | 0.500 | 0.388 | 0.100 | 41.1 | 43200 |
| 76 | 0.056 | 0.056 | 0.510 | 0.378 | 0.100 | 39.5 | 28000 |
| 77 | 0.214 | 0.135 | 0.361 | 0.290 | 0.100 | 40.1 | 40000 |
| 78 | 0.214 | 0.135 | 0.421 | 0.230 | 0.100 | 38.9 | 26700 |
| 79 | 0.060 | 0.060 | 0.430 | 0.450 | 0.100 | 43.1 | 57000 |
| 80 | 0.056 | 0.056 | 0.428 | 0.460 | 0.100 | 42.8 | 50300 |
| 81 | 0.056 | 0.056 | 0.418 | 0.470 | 0.100 | 39.4 | 42100 |
| 82 | 0.135 | 0.125 | 0.390 | 0.350 | 0.005 | 40.1 | 48400 |
| 83 | 0.135 | 0.125 | 0.390 | 0.350 | 0.010 | 40.9 | 63300 |
| 84 | 0.135 | 0.125 | 0.390 | 0.350 | 0.500 | 42.0 | 61400 |
| 85 | 0.135 | 0.125 | 0.390 | 0.350 | 1.500 | 43.8 | 58300 |
| 86 | 0.135 | 0.125 | 0.390 | 0.350 | 3.000 | 40.8 | 56900 |
| 87 | 0.135 | 0.125 | 0.390 | 0.350 | 3.100 | 40.0 | 49200 |
| *88 | 0.135 | 0.125 | 0.390 | 0.350 | 0.000 | 37.1 | 23800 |

As shown in Table 3, sample No. 88, which no manganese tungstate was added, gave a dielectric constant $\varepsilon$r less than 40, and a Q value less than 40,000.

About samples Nos. 60, 65, 66, 70, 71, 76, 78 and 81, $\alpha$, $\beta$, $\gamma$ and $\delta$ in the composition formula of $\alpha$La$_2$O$_x$·$\beta$Al$_2$O$_3$-$\gamma$CaO·$\delta$TiO$_2$ did not satisfied the above-mentioned expressions (1) to (5); thus, the samples each gave a dielectric constant $\varepsilon$r less than 40, and a Q value less than 40,000.

it was verified that in contrast to the above-mentioned samples, samples Nos. 61 to 64, 67 to 69, 72 to 75, 77, 79, 80, and 82 to 87 each gave a dielectric constant $\varepsilon$r of 40 or more, and a Q value of 40,000 or more.

About the samples satisfying the expressions (1) to (5), the following tendencies were found out: their Q values were stably higher as the value of each of $\alpha$, $\beta$, $\gamma$ and $\delta$ was closer to the middle value between the upper limit and the lower limit thereof; and their Q values were lower as the value of at least one of $\alpha$, $\beta$, $\gamma$ and $\delta$ was closer to the upper limit or the lower limit.

<Example 4>

Samples were produced by varying the amounts of Mn, W, Nb and Ta to be added in a La-Al-Ca-Ti based material containing molybdenum. A test was then made for measuring change ratios in the dielectric constant sr and the Q value. About the producing method, the same way as in Example 1 was carried out except that in the secondary formulation, $MnO_3$, $WO_3$, $Nb_2O_5$ and $Ta_2O_5$ each having a purity of 99.5% by mass or more were added at respective desired proportions.

The dielectric constant εr and the Q value were measured by the same measuring methods as in Example 1. The results are shown in Table 4. The addition amounts of $MnO_3$, $WO_3$, $Nb_2O_5$ and $Ta_2O_5$ were measured by partially pulverizing the dielectric ceramic, and then measuring values of the amounts of Mn, W, Nb and Ta with the IPC emission spectral analyzer (ICPS-8100, manufactured by Shimadzu Corp.). The values were converted in accordance with composition formulae of the abode-mentioned oxide.

[Table 4]

| Sample No. | La$_2$O$_3$ | Al$_2$O$_3$ | CaO | TiO$_2$ | MoO$_3$ (mass%) | MnO$_2$ (mass%) | WO3 (mass%) | Nb 205 (mass%) | Ta205 (mass%) | Total Amount of Mn, W, Nb, Ta (mass%) | Dielectric Properties | |
|---|---|---|---|---|---|---|---|---|---|---|---|---|
| | $\alpha$ | $\beta$ | $\gamma$ | $\delta$ | | | | | | | $\varepsilon$ r | Q value |
| 89 | 0.135 | 0.125 | 0.39 | 0.35 | 0.001 | 0.0025 | 0.0025 | 0.0025 | 0.0025 | 0.010 | 44.2 | 65000 |
| 90 | 0.135 | 0.125 | 0.39 | 0.35 | 0.001 | 0.003 | 0.002 | 0.002 | 0.002 | 0.009 | 42.8 | 44000 |
| 91 | 0.135 | 0.125 | 0.39 | 0.35 | 0.001 | 0.002 | 0.003 | 0.002 | 0.002 | 0.009 | 42.5 | 43000 |
| 92 | 0.135 | 0.125 | 0.39 | 0.35 | 0.001 | 0.002 | 0.002 | 0.003 | 0.002 | 0.009 | 42.3 | 42000 |
| 93 | 0.135 | 0.125 | 0.39 | 0.35 | 0.001 | 0.002 | 0.002 | 0.002 | 0.003 | 0.009 | 42.0 | 45500 |
| 94 | 0.135 | 0.125 | 0.39 | 0.35 | 0.001 | 0.100 | 0.100 | 0.100 | 0.100 | 0.400 | 43.8 | 50500 |
| 95 | 0.135 | 0.125 | 0.39 | 0.35 | 0.001 | 0.300 | 0.300 | 0.300 | 0.300 | 1.200 | 43.6 | 51000 |
| 96 | 0.135 | 0.125 | 0.39 | 0.35 | 0.001 | 0.750 | 0.750 | 0.750 | 0.750 | 3.000 | 43.3 | 50000 |
| 97 | 0.135 | 0.125 | 0.39 | 0.35 | 0.001 | 0.850 | 0.750 | 0.750 | 0.750 | 3.100 | 42.7 | 43500 |
| 98 | 0.135 | 0.125 | 0.39 | 0.35 | 0.001 | 0.750 | 0.850 | 0.750 | 0.750 | 3.100 | 42.5 | 43000 |
| 99 | 0.135 | 0.125 | 0.39 | 0.35 | 0.001 | 0.750 | 0.750 | 0.850 | 0.750 | 3.100 | 42.3 | 42500 |

As shown in Table 4, about all samples Nos. 89 to 99, $\alpha$, $\beta$, $\gamma$ and $\delta$ in the composition formula of $\alpha La_2O_x \cdot \beta Al_2O_3 \cdot \gamma CaO \cdot \delta TiO_2$ satisfied the expressions (1) to (5). About samples Nos . 90 to 93, and 97 to 99, the total amount of Mn, W, Nb and Ta was less than 0.01% by mass or more than 3% by mass. By contrast, about samples Nos. 89, and 94 to 96, the total amount of Mn, W, Nb and Ta was 0.01% by mass or more, and 3% by mass or less.

According to Table 4, it was verified that as compared with samples Nos. 90 to 93, and 97 to 99, samples Nos. 89, and 94 to 96 each gave a higher dielectric constant $\epsilon r$ of 43 or more, and a higher Q value of 50,000 or more.

<Example 5>

Samples were produced by varying the amounts of Bi, Yb and Ce to be added in a La-Al-Ca-Ti based material containing manganese tungstate. A test was then made for measuring the dielectric constant, the Q value, the temperature coefficient $\tau f$, and a change ratio in $\tau f$. About the producing method, the same way as in Example 1 was carried out except that in the secondary formulation, $Bi_2O_3$, $Yb_2O_3$, and $Ce_2O_3$ each having a purity of 99.5% or more by mass were added to give respective desired proportions.

The dielectric properties, $\epsilon r$ and the Q value, were measured by the same measuring methods as in Example 1. About the temperature coefficient $\tau f$ of the resonance frequency, the temperature coefficient $\tau f$ at 25 to 60°C was calculated with reference to the resonance frequency at 25°C.

About the temperature coefficient $\tau t$ of the resonance frequency, a measurement was made about each of $\tau f$ (A) at temperatures from -40 to 20°C, and $\tau f$ (B) at temperatures from 20 to 80°C. The absolute value of the difference therebetween, $\tau f$ (A) - $\tau f$ (B) |, was defined as a change in $\tau f$,

The results are shown in Table 5.

The addition amounts of $Bi_2O_3$, $Yb_2O_3$, and $Ce_2O_3$ were measured by partially pulverizing the dielectric ceramic, and then measuring the amounts of Bi, Yb and Ce with the IPC emission spectral analyzer (ICPS-8100, manufactured by Shimadzu Corp.). The values were converted in accordance with the composition formulae of the above-mentioned oxide. From the resultant total amounts, the addition amounts were grained.

[Table 5]

| Sample No. | La$_2$O$_3$ | Al$_2$O$_3$ | CaO | TiO$_2$ | MnWO$_4$ (mass%) | Bl$_2$O$_3$ (mass%) | Yb$_2$O$_3$ (mass%) | Ce$_2$O$_3$ (mass%) | Total Amount of Bl, Yb, Ce (mass%) | Dielectric Properties | | | Change of τ f \|τf (A) - τf(B)\| |
|---|---|---|---|---|---|---|---|---|---|---|---|---|---|
| | α | β | Y | δ | | | | | | ε r | Q value | τf (ppm/°C) | |
| 100 | 0.135 | 0.135 | 0.390 | 0.340 | 0.1 | 0.200 | 0.900 | 0.900 | 2,0 | 44.7 | 54000 | -3.6 | 0.5 |
| 101 | 0.135 | 0.135 | 0.390 | 0.340 | 0.1 | 0.004 | 0.998 | 0.998 | 2.0 | 45.6 | 56000 | -4.7 | 1.5 |
| 102 | 0.135 | 0.135 | 0.390 | 0.340 | 0.1 | 0.005 | 0.9975 | 0.998 | 2,0 | 46.1 | 63000 | -4.0 | 1.0 |
| 103 | 0.135 | 0.135 | 0.390 | 0.340 | 0.1 | 0,300 | 0.850 | 0.850 | 2.0 | 45.8 | 58000 | -3.2 | 0.4 |
| 104 | 0.135 | 0.135 | 0.390 | 0.340 | 0.1 | 0.310 | 0.845 | 0.845 | 2.0 | 43.8 | 48000 | -4.8 | 1.2 |
| 105 | 0.135 | 0.135 | 0.390 | 0.340 | 0.1 | 0,005 | 0.002 | 0.002 | 0.009 | 43.0 | 47000 | -5.0 | 1.4 |
| 106 | 0.135 | 0.135 | 0.390 | 0.340 | 0.1 | 0.005 | 0.0045 | 0.005 | 0.014 | 43.2 | 50000 | -4.5 | 1.0 |
| 107 | 0.135 | 0.135 | 0.390 | 0.340 | 0.1 | 0.300 | 1.350 | 1.350 | 3.0 | 42.0 | 46000 | -5.0 | 0.8 |
| 108 | 0.135 | 0.135 | 0.390 | 0.340 | 0.1 | 0.310 | 1.395 | 1.395 | 3.1 | 40.1 | 40200 | -4.6 | 1.1 |
| 109 | 0.135 | 0.135 | 0.390 | 0.340 | 0.1 | 0.200 | 0.000 | 1.800 | 2.0 | 41.8 | 45000 | -4.5 | 0.5 |
| 110 | 0,135 | 0.135 | 0.390 | 0.340 | 0.1 | 0,200 | 1.800 | 0.000 | 2.0 | 41.2 | 43000 | -4.4 | 0.6 |
| 111 | 0.135 | 0.135 | 0.390 | 0.340 | 0.1 | 0,200 | 0,000 | 0.000 | 2.0 | 40.5 | 41000 | -4.8 | 1.2 |

As shown in Table 5, about samples Nos. 101, 104 and 108, the content of bismuth oxide ($Bi_2O_3$) was less than 0.005% by mass or more than 0.3% by mass. About sample No. 105, the total content of ytterbium oxide ($Yb_2O_3$), cerium oxide ($Ce_2O_3$) and bismuth oxide ($Bi_2O_3$) was less than 0.010% by mass. About sample No. 111, ytterbium oxide ($Yb_2O_3$) and cerium, oxide ($Ce_2O_3$) were not added. As compared with these samples, samples Nos. 100, 102, 103, 106, 107, 109 and 110 each gave better values about the dielectric properties. The change in the temperature coefficient $\tau f$ of the resonance frequency was made particularly small by the effect of bismuth oxide. About such a dielectric ceramic, properties thereof are not easily changed by a change in temperature, and thus it can be stated that the dielectric ceramic can be used suitably for dielectric resonators for relay stations for portable telephones in various countries.

**Claims**

1. A dielectric ceramic which comprises, as a main component thereof, a crystal containing La, Al, Ca and Ti, and further contains a molybdenum oxide.

2. The dielectric ceramic according to claim 1, wherein when the composition formula of the main component is represented by $\alpha La_2O_x \cdot \beta Al_2O_3 \cdot \gamma CaO \cdot \delta TiO_2$ wherein $3 \leq X \leq 4$, the molar ratios $\alpha$, $\beta$, $\gamma$ and $\delta$ satisfy the following expressions:

$$0.056 \leq \alpha \leq 0.214,$$

$$0.056 \leq \beta \leq 0.214,$$

$$0.286 \leq \gamma \leq 0.500,$$

$$0.286 \leq \delta \leq 0.460,$$

and

$$\alpha + \beta + \gamma + \delta = 1$$

3. The dielectric ceramic according to claim 2, wherein the molar ratios $\alpha$, $\beta$, $\gamma$ and $\delta$ satisfy the following expressions:

$$0.078 \leq \alpha \leq 0.187,$$

$$0.078 \leq \beta \leq 0.187,$$

$$0.330 \leq \gamma \leq 0.470,$$

$$0.350 \leq \delta \leq 0.446,$$

and

$$\alpha + \beta + \gamma + \delta = 1$$

4. The dielectric ceramic according to claim 1, wherein the content of molybdenum is from 0.001 to 1% by mass in terms of molybdenum oxide content.

5. The dielectric ceramic according to claim 1, wherein at least one of Mn, W, Nb and Ta is contained as one or more metal elements in a total amount of 0.01 to 3% by weight in terms of $MnO_2$, $WO_3$, $Nb_2O_5$, and $Ta_2O_3$ amounts, respectively.

6. A dielectric resonator, comprising:

   a dielectric member comprising the dielectric ceramic according to claim 1,
   an input terminal and an output terminal that are opposed to each other, the dielectric member being sandwiched between these terminals, and
   a case surrounding the dielectric member, and dielectric-member-side tips of the input terminal and the output terminal.

7. A method for manufacturing a dielectric ceramic, comprising:

   a mixing step of mixing respective powders of a lanthanum compound, an aluminum compound, a calcium compound, and a titanium compound with a powder of any one of a molybdenum oxide, manganese tungstate, and manganese titanate, thereby producing a mixture,
   a green-body forming step of applying a pressure to the mixture, thereby forming a green body, and
   a sintering step of sintering the green body.

8. The dielectric ceramic manufacturing method according to claim 7, wherein the lanthanum compound, the aluminum compound, the calcium compound, and the titanium compound are $La_2O_3$, $Al_2O_3$, $CaCO_3$, and $TiO_2$, respectively.

9. The dielectric ceramic manufacturing method according to claim 7, wherein in the mixing step, the respective powders of the lanthanum compound, the aluminum compound, the calcium compound, and the titanium compound are mixed with the powder of the manganese tungstate or the manganese titanate, and the powder of the manganese tungstate or the manganese titanate is contained in an amount of 0.01 to 3% by mass.

10. The dielectric ceramic manufacturing method according to claim 7, wherein in the mixing step, the respective powders of the lanthanum compound, the aluminum compound, the calcium compound and the titanium compound; the powder of the manganese tungstate or the manganese titanate; a powder of at least one of Yb and Ce; and a powder of Bi are mixed with each other,
    wherein the powder ot Bi is incorporated in an amount of 0.005 to 0.3% by mass in terms of $Bi_2O_3$ amount.

11. The dielectric ceramic manufacturing method according to claim 10, wherein the powder of at least one of Yb and Ce, and the powder of Bi are mixed in a total amount of 0.010 to 3% by mass, the amounts of these elements being in terms of $Yb_2O_3$, $Ce_2O_3$ and $Bi_2O_3$ amounts, respectively.

FIG. 1

## INTERNATIONAL SEARCH REPORT

| | International application No. |
|---|---|
| | PCT/JP2009/071648 |

**A. CLASSIFICATION OF SUBJECT MATTER**
*C04B35/46(2006.01)i, H01B3/12(2006.01)i, H01P11/00(2006.01)i*

According to International Patent Classification (IPC) or to both national classification and IPC

**B. FIELDS SEARCHED**

Minimum documentation searched (classification system followed by classification symbols)
C04B35/46, H01B3/12, H01P11/00

Documentation searched other than minimum documentation to the extent that such documents are included in the fields searched
Jitsuyo Shinan Koho 1922-1996 Jitsuyo Shinan Toroku Koho 1996-2010
Kokai Jitsuyo Shinan Koho 1971-2010 Toroku Jitsuyo Shinan Koho 1994-2010

Electronic data base consulted during the international search (name of data base and, where practicable, search terms used)
CA/REGISTRY(STN), CAplus(STN)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2006-335599 A (Nippon Tangsten Co., Ltd.),<br>14 December 2006 (14.12.2006),<br>claims; paragraphs [0001], [0038] to [0040],<br>[0050] to [0054]; tables 1, 2<br>(Family: none) | 1-4,7,8<br>5,6 |
| Y | JP 2008-266121 A (Kyocera Corp.),<br>06 November 2008 (06.11.2008),<br>claims 1, 5; paragraph [0038]; fig. 1<br>(Family: none) | 5,6 |
| Y | JP 2003-238242 A (Kyocera Corp.),<br>27 August 2003 (27.08.2003),<br>claims; paragraph [0036]; fig. 1<br>(Family: none) | 5,6 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>26 March, 2010 (26.03.10) | Date of mailing of the international search report<br>06 April, 2010 (06.04.10) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2009/071648

| C (Continuation). DOCUMENTS CONSIDERED TO BE RELEVANT | | |
|---|---|---|
| Category* | Citation of document, with indication, where appropriate, of the relevant passages | Relevant to claim No. |
| A | JP 2006-117448 A (NGK Spark Plug Co., Ltd.), 11 May 2006 (11.05.2006), claims; table 1 (Family: none) | 1-11 |
| A | JP 2006-103977 A (NGK Spark Plug Co., Ltd.), 20 April 2006 (20.04.2006), claims; tables 1 to 3 & US 2006/0068983 A1 & EP 1643512 A1 | 1-11 |

Form PCT/ISA/210 (continuation of second sheet) (July 2009)

**INTERNATIONAL SEARCH REPORT**

| International application No. |
| --- |
| PCT/JP2009/071648 |

**Box No. II      Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III      Observations where unity of invention is lacking (Continuation of item 3 of first sheet)**

This International Searching Authority found multiple inventions in this international application, as follows:
The invention in claim 1 is not novel and does not have a special technical feature, since the invention is described in the following document 1. Consequently, the invention in claim 1 does not satisfy the requirement of unity of invention.
The invention in claims as indicated below is relevant to main invention.
Claims 1 - 3

Document 1: JP 2006-335599 A

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**      ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 6007663 A